# EUROPÄISCHE PATENTSCHRIFT

(11) **EP 3 263 428 B1**
(45) Veröffentlichungstag und Bekanntmachung des Hinweises auf die Patenterteilung: **21.08.2019**
(21) Anmeldenummer: 17178584.3
(22) Anmeldetag: 29.06.2017
(51) Int. Cl.: B62D 35/00, B62D 37/02

(54) **TECHNIK ZUR LUFTUMSTRÖMUNG EINES SATTELZUGS**
TECHNIQUE FOR AIR CIRCULATION OF A SEMITRAILER
TECHNIQUE DE CIRCULATION D'AIR D'UN VÉHICULE TRACTEUR

(30) Priorität: 01.07.2016 DE 102016008120
(43) Veröffentlichungstag der Anmeldung: 03.01.2018
(73) Patentinhaber: MAN Truck & Bus SE, 80995 München (DE)
(72) Erfinder: Gutzeit, Reinhard, 82049 Pullach (DE)
(74) Vertreter: v. Bezold & Partner Patentanwälte - PartG mbB

(56) Entgegenhaltungen:
- WO-A1-2013/110487
- DE-A1- 3 628 412
- DE-A1-102005 048 142
- US-A- 4 290 639

## Beschreibung

Die Erfindung betrifft eine Technik zur Luftumströmung eines Sattelzugs im Bereich zwischen einer Sattelzugmaschine und einem Sattelauflieger.

Bei herkömmlichen LKW-Sattelzugfahrzeugen wird die Aerodynamik zwischen Fahrerhaus und der Stirnseiten des Aufliegers durch einen auch als Dachspoiler bezeichneten Fahrtwindabweiser und zusätzlich durch seitliche Windleitbleche verbessert. Der Fahrtwindabweiser ist bei Sattelfahrzeugen zum Kastenauflieger hin derart konkav ausgeformt, dass auch beim Durchfahren einer scharfen Kurve, beim Wenden oder beim Rangieren des Sattelzugs eine Kollision des Dachspoilers mit dem Aufliegerkasten vermieden bzw. unmöglich wird.

Dadurch bleibt jedoch im Dachbereich zwischen Fahrerhaus mit Fahrtwindabweiser und Stirnseite des Aufliegers eine Freifläche offen, die eine laminare und somit verwirbelungsfreie Luftströmung verhindert und den c_{W}-Wert des Sattelzugs ungünstig erhöht.

Im Lehrbuch "Aerodynamik der stumpfen Körper", Wolf-Heinrich Hucho, Vieweg 2002, ist auf den Seiten 288 und 289 die Anordnung eines statischen Dachspoilers (der auch als Leitblech oder Fahrtwindabweiser bezeichnet werden kann) beschrieben, um die Umströmung von Zugfahrzeug und Anhänger zu optimieren. Ein Minimum des c_{W}-Werts wird erreicht, wenn die über den Dachspoiler strömende Luft tangential auf den Auflieger trifft.

Der Druckschrift DE 36 28 412 A1 ist ein LKW-Dachspoiler mit höhenverstellbarem Windleitschild zu entnehmen. Zur Vereinfachung der Höhenverstellung nehmen nur wenige Stützen zeitgemittelte Kräfte auf, während Stoßdämpfer das Windleitschild auch gegen dynamische Wechselbelastungen und Flatterbewegungen sichern.

Jedoch verbleibt bei all den herkömmlichen Dachaufbauten stets eine für den Knickwinkel zwischen Zugmaschine und Auflieger bei Kurvenfahrten notwendige Freifläche zwischen Fahrerhaus und Stirnseite des Aufliegers.

Das Dokument US 4,290,639 beschreibt einen Windabweiser mit beweglicher Verkleidung, der an der Schlepperkabine eines Sattelzuges angebracht ist, um den Luftwiderstand während der Fahrt des Sattelzuges zu reduzieren. Ein Windabweiser, welcher direkt an der Kabine oder einem stationären Windabweiser angebracht werden kann, hat eine Verkleidung, die zwischen einer Betriebsstellung zur Verringerung des Luftwiderstands und einer Ruheposition ohne wesentlichen Einfluss auf den Luftwiderstand schwenkt. Die Verkleidung kann mittels eines durch die Fahrt des Sattelzuges gefüllten Luftsacks aus der Ruheposition in die Betriebsposition bewegt werden.

Das Dokument DE 10 2005 048 142 A1 betrifft ein Zugfahrzeug für Zugfahrzeug-Anhängerkombinationen mit einer an einem Fahrerhaus angeordneten und über dessen Heckwand hinaus ragenden Windleiteinrichtung zur Reduzierung des Luftwiderstands. Ein verstellbarer Leitflügel der Windleiteinrichtung ist in Fahrzeuglängsrichtung geschwindigkeitsabhängig zwischen einer eingefahrenen Stellung und einer ausgefahrenen Stellung derart verstellbar, dass der Leitflügel in der ersten Geschwindigkeiten zugeordneten eingefahrenen Stellung einen möglichst großen Schwenkbereich zwischen dem Anhänger und dem Zugfahrzeug ermöglicht und in der ausgefahrenen, gegenüber den ersten Geschwindigkeiten höheren zweiten Geschwindigkeiten zugeordneten Stellung einen Zwischenraum zwischen dem Fahrerhaus und dem Anhänger im Wesentlichen vollständig überbrückt.

Das Dokument WO 2013/110487 A1 beschreibt ein Luftführungselement für eine verbesserte Strömung über einen Spalt zwischen einem Zugfahrzeug und einem Anhängerfahrzeug. Das Luftführungselement ist am Zugfahrzeug oder Anhängerfahrzeug montierbar und umfasst ein flexibles und luftdichtes Luftkissen, das mit einem Füllkanal verbunden ist zur weitgehend wartungsarmen und betriebssicheren Luftzufuhr, die unabhängig von der Druckluftversorgung des Zugfahrzeugs installiert werden kann. Der Füllkanal weist auf der dem Luftkissen abgewandten Seite eine in Fahrtrichtung orientierte Lufteintrittsöffnung auf, die so angeordnet ist, dass das Luftkissen ausschließlich vom dynamischen Druck des Fahrtwinds gefüllt wird.

Es ist somit eine Aufgabe der Erfindung, die Aerodynamik eines Sattelzugs, insbesondere mit Kastenauflieger, zu verbessern.

Diese Aufgabe wird durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt der Erfindung ist eine Vorrichtung zur Luftumströmung eines Sattelzugs zwischen einer Sattelzugmaschine und einem Sattelauflieger bereitgestellt. Die Vorrichtung umfasst eine Luftleitfläche, die zwischen einer ersten Stellung und einer zweiten Stellung beweglich ist. Die Vorrichtung umfasst ferner eine Steuerung, die dazu ausgebildet ist, die Luftleitfläche abhängig von einer Fahrgeschwindigkeit des Sattelzugs in eine der Stellungen zu bewegen. Die Luftleitfläche ist dazu ausgebildet, in der zweiten Stellung eine Freifläche zwischen einem auf einem Fahrerhaus der Sattelzugmaschine angeordneten Fahrtwindabweiser und einer Stirnseite des Sattelaufliegers im Vergleich zur ersten Stellung zu verkleinern.

Die Technik ermöglicht mittels der Luftleitfläche die Freifläche zu schließen oder zu verkleinern zur Verbesserung der Aerodynamik bei Fahrgeschwindigkeiten in einem bestimmten Geschwindigkeitsbereich, beispielsweise im oberen Geschwindigkeitsbereich bezüglich der zulässigen Fahrgeschwindigkeit des Sattelzugs. Beispielsweise kann die Luftleitfläche die Freifläche bei Fahrgeschwindigkeiten schließen oder verkleinern, bei denen keine oder keine großen Schwenkbewegungen zwischen Sattelzugmaschine und Sattelauflieger auftreten.

Die Luftleitfläche kann durch einen räumlichen Körper gebildet sein. Zumindest ein Teil des Körpers kann vom Fahrtwind umströmt werden und die Luftleitfläche bilden. Die Luftleitfläche kann eine Oberfläche oder einen Teil der Oberfläche eines zwischen der ersten Stellung und der zweiten Stellung beweglichen und/oder verformbaren Körpers sein. Die Luftleitfläche kann zwischen der ersten Stellung und der zweiten Stellung bewegt werden, indem sich der Körper bewegt und/oder verformt. Der Körper kann (beispielsweise senkrecht zur Luftleitfläche) eine Wandstärke und/oder einen oder mehrere Hohlräume umfassen.

Die Luftleitfläche kann (beispielsweise in der zweiten Stellung) einseitig vom Fahrtwind angeströmt sein. Die Luftleitfläche kann ein Fahrtwindspoiler sein. Alternativ oder ergänzend kann die Luftleitfläche ein Luftleitflügel sein.

Die Steuerung kann ferner dazu ausgebildet sein, einen Knickwinkel zwischen Zugmaschine und Auflieger zu erfassen. Überschreitet der erfasste Knickwinkel einen ersten Grenzwert kann die Steuerung die erste Stellung bewirken (beispielsweise unabhängig von der Fahrgeschwindigkeit). Alternativ oder ergänzend kann die zweite Stellung bewirkt werden unter der Voraussetzung (beispielsweise zusätzlich zur Fahrgeschwindigkeitsabhängigkeit), dass der erfasste Knickwinkel kleiner als ein zweiter Grenzwert ist. Der zweite Grenzwert kann größer als der erste Grenzwert sein.

Die Luftleitfläche kann (in der ersten Stellung, in der zweiten Stellung und/oder jeder Zwischenstellung) sich quer zur Sattelzugmaschine erstrecken. Die Luftleitfläche kann in einer Schnittansicht quer zur Sattelzugmaschine ungekrümmt sein. In einer Schnittansicht längs der Sattelzugmaschine kann die Luftleitfläche (beispielsweise in der zweiten Stellung nach unten) gekrümmt sein.

Die Luftleitfläche kann in der ersten Stellung vertikal oder in Fahrtrichtung ansteigend sein. Alternativ oder ergänzend kann die Luftleitfläche in der zweiten Stellung horizontal oder in Fahrtrichtung abfallend sein.

Die Vorrichtung kann auf dem Fahrerhaus der Sattelzugmaschine und/oder am Fahrtwindabweiser der Sattelzugmaschine angeordnet oder anordenbar sein. Beispielsweise ist die Luftleitfläche zwischen Fahrerhausdach und dem Fahrtwindabweiser angeordnet oder anordenbar.

Die Luftleitfläche kann in der ersten Stellung im Fahrtwindabweiser, unterhalb des Fahrtwindabweisers und/oder im Windschatten des Fahrtwindabweisers angeordnet oder anordenbar sein. In der ersten Stellung kann die Luftleitfläche vollständig oder im Wesentlichen innerhalb des Fahrtwindabweisers angeordnet oder anordenbar sein. Beispielsweise kann die Luftleitfläche in der ersten Stellung bis auf einen geringfügigen Überstand einer Kante der Luftleitfläche im Fahrtwindabweiser angeordnet oder anordenbar sein. Beispielsweise ist die Luftleitfläche in der ersten Stellung unterhalb einer für die Fahrtwindablenkung wirksamen Fläche des Fahrtwindabweisers angeordnet oder anordenbar.

Der Sattelauflieger kann ein Kastenauflieger sein. Die Stirnseite des Sattelaufliegers kann auch als Aufliegerfront bezeichnet werden. Die Stirnseite des Sattelaufliegers kann rechteckig, flach und/oder vertikal sein. Die Stirnseite kann (am oberen Ende) eine Dachkante umfassen. Die Stirnseite links und rechts jeweils eine vertikale Eckkante umfassen. Die Dachkante und/oder die Eckkanten können jeweils geradlinig sein. Alternativ kann der Sattelauflieger oder dessen Aufbau eine komplexere Form aufweisen. Beispielsweise kann die Stirnseite und oder die Dachkante gekrümmt sein.

In der ersten Stellung kann eine rückseitige Kante des Fahrtwindabweisers der Stirnseite des Sattelaufliegers zugewandt sein. Die rückseitige Kante des Fahrtwindabweisers kann (im Sinne der Fahrtrichtung) hinten am Fahrtwindabweiser angeordnet sein.

Die rückseitige Kante des Fahrtwindabweisers kann in der ersten Stellung die zur Dachkante an der Stirnseite des Sattelaufliegers nächstliegende Kante seitens der Sattelzugmaschine sein. Die Freifläche kann in der ersten Stellung seitens der Sattelzugmaschine durch den Fahrtwindabweiser berandet sein.

Die rückseitige Kante des Fahrtwindabweisers kann konkav gekrümmt sein. Die rückseitige Kante des Fahrtwindabweisers kann in Fahrtrichtung (nach vorne) gekrümmt sein, d. h. nach vorne eingebuchtet sein. Die rückseitige Kante des Fahrtwindabweisers kann einen Kreisbogen beschreiben. Der Kreismittelpunkt des Kreisbogens kann (beispielsweise in der Draufsicht) einer Position eines Königszapfen am Sattelauflieger bzw. dessen Aufnehmung an der Sattelzugmaschine entsprechen. Ein Radius des Kreisbogens kann (beispielsweise zuzüglich eines Sicherheitsabstands) größer sein als der größte Abstand zwischen einer vertikalen Achse durch den Königszapfen am Sattelauflieger und der Stirnseite des Sattelaufliegers, beispielsweise den Eckkanten im Fall eines Kastenaufliegers.

Der Fahrtwindabweiser kann statisch sein. Der Fahrtwindabweiser kann an einem der Fahrtrichtung entgegengesetzten Ende offen sein (rückseitige Öffnung). Ein Rand der rückseitigen Öffnung des Fahrtwindabweisers kann die rückseitige Kante des Fahrtwindabweisers umfassen. Die Luftleitfläche kann in der zweiten Stellung durch die rückseitige Öffnung des Fahrtwindabweisers ragen.

Eine Kante der Luftleitfläche kann in der zweiten Stellung der Stirnseite des Sattelaufliegers zugewandt sein. Die Kante der Luftleitfläche kann eine freistehende Kante sein. Die Luftleitfläche kann in der zweiten Stellung (beispielsweise durch die rückseitige Öffnung) aus dem Fahrtwindabweiser entgegen der Fahrtrichtung herausragen. Beispielsweise kann in der zweiten Stellung die Kante der Luftleitfläche außerhalb des Fahrtwindabweisers und/oder zwischen dem Fahrtwindabweiser und der Stirnseite des Sattelaufliegers angeordnet oder anordenbar sein.

Die Kante der Luftleitfläche kann sich quer zur Fahrtrichtung erstrecken. Die Kante der Luftleitfläche kann in der ersten Stellung von der Stirnseite des Sattelaufliegers abgewandt sein.

Die Kante der Luftleitfläche kann in der zweiten Stellung die zur Dachkante des Sattelaufliegers nächstliegende Kante seitens der Sattelzugmaschine sein.

Die Luftleitfläche kann pneumatisch zwischen der ersten Stellung und der zweiten Stellung bewegt werden. Die Bewegung der Luftleitfläche zwischen der ersten Stellung und der zweiten Stellung kann eine Translation (beispielsweise parallel zur Luftleitfläche) oder eine Drehung (beispielsweise um eine horizontale Achse quer zu Fahrtrichtung) sein. Die Vorrichtung kann mindestens einen Zylinder und mindestens ein durch die Steuerung gesteuertes Magnetventil umfassen, das den Zylinder gemäß der Steuerung wahlweise mit einem Druckluftspeicher verbindet.

Die Kante der Luftleitfläche kann in der zweiten Stellung zwischen der rückseitigen Kante des Fahrtwindabweisers und der Stirnseite des Sattelaufliegers angeordnet oder anordenbar sein. Eine Höhe der Kante der Luftleitfläche in der zweiten Stellung kann einer Höhe der Dachkante an der Stirnseite des Sattelaufliegers entsprechen.

Die rückseitige Kante der Luftleitfläche kann über die Breite des Fahrerhauses geradlinig sein und/oder einem Verlauf der (geradlinigen oder gekrümmten) Dachkante entsprechen. Beispielsweise kann die rückseitige Kante der Luftleitfläche einen über die Breite einheitlichen Abstand zur Dachkante aufweisen. In besonders angepassten Ausführungsformen kann die Luftleitfläche für einen glatten Übergang zwischen Fahrerhaus und komplexeren Formen der Stirnseiten des Sattelaufliegers entsprechend der Dachkante gekrümmt sein.

Alternativ oder ergänzend kann die rückseitige Kante an den Seiten einen größeren Abstand als in der Fahrzeugmitte aufweisen, abgerundete Ecken aufweisen oder konvex zur Luftleitfläche gekrümmt sein (d. h. nach hinten ausbauchen). Dadurch kann in der zweiten Stellung ein Verhältnis von eingeschränktem Knickwinkelbereich und noch verbleibender Freifläche vergrößert werden.

Die Luftleitfläche kann um eine Achse schwenkbeweglich sein. Die Schwenkachse kann quer zur Fahrtrichtung angeordnet oder anordenbar sein. Alternativ oder ergänzend kann die Schwenkachse in Fahrtrichtung vor der rückseitigen Kante des Fahrtwindabweisers angeordnet oder anordenbar sein. Die Schwenkachse kann unter dem Fahrtwindabweiser, beispielsweise zwischen Fahrerhaus und Fahrtwindabweiser, angeordnet oder anordenbar sein. Die Achse zur schwenkbeweglichen Lagerung der Luftleitfläche kann an einer der freistehenden Kante der Luftleitfläche gegenüberliegenden Seite der Luftleitfläche angeordnet sein.

Die Schwenkachse und/oder ein Lager der Schwenkachse können dazu ausgebildet sein, aerodynamische Kräfte bei einer Höchstgeschwindigkeit des Sattelzugs an das Fahrerhaus zu übertragen. Bei einer mehrfach höheren Belastung (beispielsweise einer dreifach höheren Belastung als die aerodynamische Kraft bei der Höchstgeschwindigkeit) und/oder bei einer anderen Belastungsrichtung (als die aerodynamische Kraftrichtung bei der Höchstgeschwindigkeit) können diese dazu ausgebildet sein zu brechen. Die Luftleitfläche kann durch den Sollbruch der Schwenkachse und/oder des Lagers der Schwenkachse bei direktem Kontakt zwischen Sattelauflieger und Luftleitfläche ein Zerbrechen der Luftleitfläche verhindern. Optional kann die Luftleitfläche mittels mindestens eines Fangseils am Fahrerhaus (beispielsweise über den Fahrtwindabweiser) befestigt sein.

Die Belastungsrichtung der aerodynamischen Kräfte kann eine vertikale Komponente nach unten und/oder eine horizontale Komponente entgegen der Fahrtrichtung umfassen. Die zum Sollbruch führende Belastungsrichtung kann eine Kraftrichtung in Fahrtrichtung umfassen.

Die Steuerung kann die erste Stellung bei einer im Vergleich zur zweiten Stellung langsameren Fahrgeschwindigkeit des Sattelzugs bewirken. Die Steuerung kann dazu ausgebildet sein, die zweite Stellung zu bewirken, wenn die Fahrgeschwindigkeit größer als eine obere Geschwindigkeitsschwelle ist. Alternativ oder ergänzend kann die Steuerung dazu ausgebildet sein, die erste Stellung zu bewirken, wenn die Fahrgeschwindigkeit kleiner als eine untere Geschwindigkeitsschwelle ist.

Die untere Geschwindigkeitsschwelle kann kleiner als die obere Geschwindigkeitsschwelle sein, beispielsweise um 5 km/h bis 10 km/h kleiner. Die untere Geschwindigkeitsschwelle kann kleiner als 75 km/h, beispielsweise 65 km/h oder 70 km/h, sein. Die obere Geschwindigkeitsschwelle kann größer oder gleich 75 km/h sein.

Die untere Geschwindigkeitsschwelle und die obere Geschwindigkeitsschwelle können kollektiv als Referenzgrößen bezeichnet werden. Alternativ oder ergänzend zu den zum Erreichen der ersten Stellung und der zweiten Stellung jeweils unterschiedlichen Referenzgrößen kann eine Berechnungsweise und/oder Berechnungsgrundlage der Fahrgeschwindigkeit jeweils für die erste Stellung und die zweite Stellung unterschiedlich sein.

Die Steuerung ist dazu ausgebildet, die Luftleitfläche von der zweiten Stellung in die erste Stellung zu bewegen abhängig von einem Verlauf der Fahrgeschwindigkeit in einem ersten Zeitfenster, und die Luftleitfläche von der ersten Stellung in die zweite Stellung zu bewegen abhängig von einem Verlauf der Fahrgeschwindigkeit in einem zweiten Zeitfenster. Das erste Zeitfenster kann kürzer sein als das zweite Zeitfenster sein. Das erste Zeitfenster kann beispielsweise eine Breite von 10 s umfassen. Das zweite Zeitfenster kann beispielsweise eine Breite von 60 s umfassen.

Die Abhängigkeit vom Verlauf der Fahrgeschwindigkeit kann eine Gedächtnisfunktion oder einen zeitlichen Mittelwert (beispielsweise ein gleitender Durchschnittswert der Fahrgeschwindigkeit im jeweiligen Zeitfenster) umfassen. Ein Schwellwert (von beispielsweise 71 km/h) für den zeitlichen Mittelwert im ersten Zeitfenster für den Übergang in die erste Stellung kann kleiner sein als die obere Geschwindigkeitsschwelle (von beispielsweise 75 km/h) und/oder größer sein als die untere Geschwindigkeitsschwelle (von beispielsweise 70 km/h).

Gemäß einem weiteren Aspekt der Erfindung ist ein Nutzfahrzeug, insbesondere eine Sattelzugmaschine, mit einer Vorrichtung gemäß dem erstgenannten Aspekt bereitgestellt.

Die zuvor beschriebenen Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: schematisch eine vertikale Querschnittsansicht eines Ausführungsbeispiels einer Vorrichtung zur Luftumströmung eines Sattelzugs, vorzugsweise für einen Kastenauflieger als Sattelauflieger;
- Figur 2: schematisch eine Aufsicht eines Ausführungsbeispiels einer Vorrichtung zur Luftumströmung eines Sattelzugs;
- Figur 3: schematisch einen Verlauf der Fahrgeschwindigkeit des Sattelzugs und daraus abgeleitete Stellungen einer Luftleitfläche;
- Figur 4: ein schematisches Blockschaltbild eines Ausführungsbeispiels mit einer ersten Ventilanordnung; und
- Figur 5: ein schematisches Blockschaltbild eines Ausführungsbeispiels mit einer zweiten Ventilanordnung.

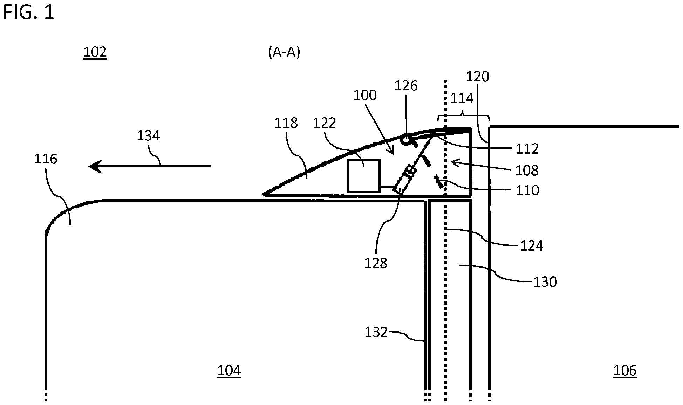

Figur 1 zeigt ein Ausführungsbeispiel einer mit dem allgemeinen Bezugszeichen 100 bezeichneten Vorrichtung zur Luftumströmung eines Sattelzugs 102. Der Sattelzug 102 umfasst eine Sattelzugmaschine 104 und einen Sattelauflieger 106 (beispielsweise einen Kastenauflieger). Die Luftumströmung betrifft den Dachbereich des Sattelzugs 102 zwischen der Sattelzugmaschine 104 und dem Sattelauflieger 106.

Die Vorrichtung 100 umfasst eine Luftleitfläche 108 (beispielsweise ein Windleitblech), die zwischen einer ersten Stellung 110 und einer zweiten Stellung 112 beweglich ist, beispielsweise schwenkbeweglich. Die Luftleitfläche 108 ist dazu ausgebildet, in der zweiten Stellung eine Freifläche 114 zwischen einem auf einem Fahrerhaus 116 der Sattelzugmaschine 104 angeordneten Fahrtwindabweiser 118 und einer Stirnseite 120 des Sattelaufliegers 106 im Vergleich zur ersten Stellung 110 zu verkleinern. Die Vorrichtung 100 umfasst ferner eine Steuerung 122, die dazu ausgebildet ist, die Luftleitfläche 108 abhängig von einer Fahrgeschwindigkeit des Sattelzugs 102 in eine der Stellungen 110 und 112 zu bewegen.

Die Vorrichtung 100 ist vorzugsweise auf dem Dach des Fahrerhauses 116, beispielsweise innerhalb des Fahrtwindabweisers 118 angeordnet. Der Fahrtwindabweiser 118 kann statisch sein. Beispielsweise ändert sich während der Fahrt oder in Abhängigkeit von der Fahrgeschwindigkeit des Sattelzugs 102 die Form oder Windangriffsfläche des Fahrtwindabweisers 118 nicht.

In einem niedrigen Geschwindigkeitsbereich bewirkt die Steuerung 122 die erste Stellung 110. Im Dachbereich zwischen Fahrerhaus 116 und Stirnseite 120 des Sattelaufliegers 106 bleibt ein Kreisabschnitt als die freie Fläche 114 offen. Die Freifläche 114 ermöglicht große Knickwinkel des Sattelzugs 102 bei Kurvenfahrten und beim Rangieren des Sattelzuges 102, beispielsweise bis 60°, bis 90° oder über 90°. Die dem Fahrerhaus 116 nächste Schwenklinie der Stirnseite 120 des Sattelaufliegers 106 ist durch die vertikale gestrichelte Linie 124 im vertikalen Schnittbild durch die Fahrzeugmitte in Figur 1 dargestellt. Durch die Freifläche 114 kollidiert die Stirnseite 120 des Sattelaufliegers 106 bei keinem Knickwinkel mit dem Fahrtwindabweiser 118.

In dem in Figur 1 gezeigten abgeklappten Zustand der ersten Stellung 110 ist die Luftleitfläche 108 vollständig (in Fahrtrichtung 134) vor der Schwenklinie 124 angeordnet. Im niedrigen Geschwindigkeitsbereich, in dem die Luftleitfläche 108 die erste Stellung 110 einnimmt, sind enge Kurvenfahren und Wendemanöver uneingeschränkt möglich, da die Luftleitfläche 108 in der ersten Stellung 110 nicht in den Schwenkbereich des Aufliegers hineinragen.

In der zweiten Stellung 112 wird (ausschließlich) bei anhaltend hoher Fahrgeschwindigkeit des Sattelzugs 102 die Freifläche 114 im Dachbereich verkleinert oder nahezu geschlossen durch die Luftleitfläche 108. Dadurch wird die bei den hohen Fahrgeschwindigkeiten wesentliche Aerodynamik des Sattelzugs 102 verbessert, indem es nicht zu einer Strömungsunterbrechung entlang der Dachfläche von Zugmaschine 104 und Sattelanhänger 106 kommt. Infolgedessen wird der Bedarf an Antriebsleistung reduziert.

Weil die fahrbaren Kurvenradien mit zunehmender Fahrgeschwindigkeit abnehmen, treten bei den die zweite Stellung auslösenden Fahrgeschwindigkeiten nur kleine Knickwinkel zwischen Zugmaschine 104 und Sattelauflieger 106 auf. Daher ist das Schließen der Freifläche 114 in einem hohen Geschwindigkeitsbereich ohne Gefahr einer Kollision von Stirnseite 120 des Sattelaufliegers 106 und Luftleitfläche 108 physikalisch möglich und für die Nutzung und den Fahrbetrieb unbedenklich.

In einer alternativen Ausführungsform ist die Steuerung 122 innerhalb des Fahrerhauses 116 oder als Anbauteil an der Zugmaschine 104 unterhalb des Sattelaufliegers 106 angeordnet.

Die Steuerung 122 bewirkt eine Schwenkbewegung der Luftleitfläche 108 um eine Querachse, die an einem fahrzeugmittigen Lager 126 oder zwei zur Fahrzeugmitte symmetrisch angeordnete Lager 126 geführt ist. Die Schwenkbewegung der Luftleitfläche 108 wird zumindest beim Übergang von der ersten Stellung 110 in die zweite Stelle 112 durch einen Zylinder 128 pneumatisch angetrieben.

Optional sind seitliche Fahrtwindleitflächen 130 (beispielsweise seitliche Windleitbleche) an einer Rückseite 132 des Fahrerhauses 104 angeordnet. Dadurch wird in Verbindung mit der Vorrichtung 100 im gesamten Geschwindigkeitsbereich an allen drei freien Außenfläche eine laminare Strömung zwischen Fahrerhaus 104 und der Stirnseite 120 des Sattelaufliegers 106 ermöglicht.

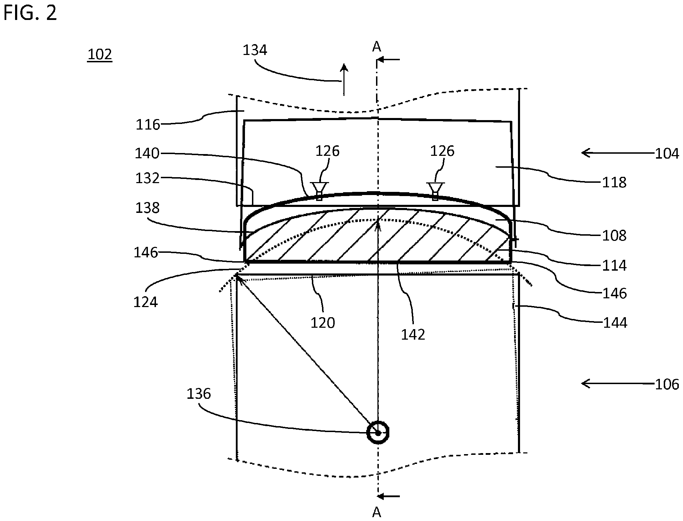

Figur 2 zeigt schematisch eine Draufsicht des Sattelzugs 102. Genauer ist ein rückwärtiger Abschnitt des Fahrerhauses 104 und ein vorderer Abschnitt eines Kastenaufliegers als der Sattelauflieger 106 dargestellt. Die Merkmale des ersten Ausführungsbeispiels der Figur 1 und des in der Figur 2 gezeigten zweiten Ausführungsbeispiels sind kombinierbar. Insbesondere kann die Schnittdarstellung der Figur 1 der in Figur 2 gezeigten Schnittebene A-A entsprechen.

Die Schwenklinie 124 ist ein Kreisbogen um den Königszapfen 136 bzw. des Mittelpunkts der Sattelplatte.

Der statische Fahrtwindabweiser 118 kragt seitlich über die Rückseite 132 des Fahrerhauses 116 aus. Eine rückseitige Kante 138 ist konkav, d. h. in Fahrtrichtung 132 gekrümmt. Vorzugsweise tangiert die rückseitige Kante 138 des Fahrtwindabweisers 118 die Rückseite 132 des Fahrerhauses 116. Die rückseitige Kante 138 kann in der (in der Figur 2 gezeigten) Draufsicht dem Kreisbogen der Schwenklinie 124 des Sattelaufliegers 106 entsprechen (versetzt in Fahrtrichtung 134) oder kann konzentrisch um den Königszapfen 136 mit einem entsprechend größeren Radius sein.

Dadurch verbleibt in der ersten Stellung 110 die schraffiert dargestellte Freifläche 114 zwischen Fahrtwindabweiser 118 und Stirnseite 120 des Sattelaufliegers 106 offen.

Die Luftleitfläche 108 schließt in der in Figur 2 gezeigten zweiten Stellung 112 die Freifläche 114. Optional ist eine in Fahrtrichtung vordere Kante 140 der Luftleitfläche 108 gleich der gekrümmten rückseitigen Kante 138 des Fahrtwindabweisers 118 gekrümmt. Dadurch kann bei minimalem Gewicht der Luftleitfläche 108 ein gleichmäßiger Überlapp von Fahrtwindabweiser 118 und Luftleitfläche 108 erreicht werden.

Eine bezüglich der Fahrtrichtung 132 rückseitige Kante 142 der Luftleitfläche 108 kann geradlinig (quer zur Sattelzugmaschine 104) sein.

Eine Absenkbewegung der Luftleitfläche 108 von der zweiten Stellung 112 in die erste Stellung 110 kann durch eine Rückstellkraft des Zylinders 128, eine Federvorspannung und/oder das Eigengewicht der Luftleitfläche 108 gemäß der Steuerung 122 bewirkt werden. In der ersten Stellung 110 ist die Luftleitfläche 108 vollständig in Fahrtrichtung 134 vor der Schwenklinie 124 des Sattelaufliegers 106 angeordnet.

In der zweiten Stellung 112 sind die Knickwinkel aufgrund der anhaltend hohen Fahrgeschwindigkeit auf den Knickwinkelbereich 144 eingeschränkt. Der eingeschränkte Knickwinkelbereich 144 kann dem im obersten Geschwindigkeitsbereich des Sattelzugs 102 bei kontrollierbarer Fahrt maximal auftretenden Knickwinkel entsprechen.

Optional sind die Ecken 146 der rückseitigen Kante 142 der Luftleitfläche 108 abgerundet oder konvex (d. h. entgegen der Fahrtrichtung 134 und zur Fahrzeugaußenseite) gekrümmt. Dadurch kann ohne weitere Einschränkung des Knickwinkelbereichs 144 der verbleibende Abstand zwischen der rückseitigen Kante 142 der Luftleitfläche 108 und der Stirnseite 120 des Sattelaufliegers 106 weiter verkleinert werden.

Der verbleibende Abstand zwischen rückseitiger Kante 142 in der zweiten Stellung 112 und Stirnseite 120 ermöglicht vertikale Kippbewegungen zwischen Fahrerhaus 116 und der Stirnseite 120 durch Bodenunebenheiten, Kuppen oder Senken. Ferner kann der Restabstand geringe Lageänderungen der Rückseite 132 des Fahrerhauses 116 aufgrund von auf das Fahrerhaus 116 einwirkenden aerodynamischen Scherkräften berücksichtigen.

Die rückseitige Kante 142 der Luftleitfläche 108 kann in der zweiten Stellung einer Höhe der Stirnseite 120 des Sattelaufliegers 106 entsprechen oder (beispielsweise geringfügig) tiefer sein. Dadurch kann die Luftumströmung optimiert werden (durch Verringerung des c_{W}-Werts) ohne die für den Luftwiderstand relevante Querschnittsfläche des Sattelzugs 102 zu erhöhen. In Längsrichtung kann die rückseitige Kante 142 der Luftleitfläche 108 bündig mit den seitlichen Fahrtwindleitflächen 130 und seitlichen Auskragungen (beispielsweise aufgrund der konkaven rückseitigen Kante 142) des Fahrtwindabweisers 118 sein.

Die Freifläche 114 wird in Fahrtrichtung 134 durch die rückseitige Kante 138 des Fahrtwindabweisers 118 begrenzt.

In der ersten Stellung 110 kann die Luftleitfläche 108 vertikal sein oder um einen Winkel (von beispielsweise 15°-30°) gegenüber der Vertikalen geneigt bleiben, so dass das Eigengewicht der Luftleitfläche 108 diese in der ersten Stellung 110 hält.

Der Betätigungshub und der Einbau des Pneumatik-Zylinders 128 ist auf die Stirnseite 120 (beispielsweise eine Dachkante oder Oberkante der Stirnseite 120) des Sattelaufliegers 106 so abgestimmt, dass die Luftleitfläche 108 im ausgeklappten Zustand, d. h. in der zweiten Stellung 112, die erforderliche Höhe und/oder einen optimalen Anstellwinkel erreicht. In der ersten Stellung 110 wird die Luftleitfläche 108 so weit in Fahrtrichtung 134 gekippt, dass keine Kollision mit dem Sattelauflieger 106 möglich ist.

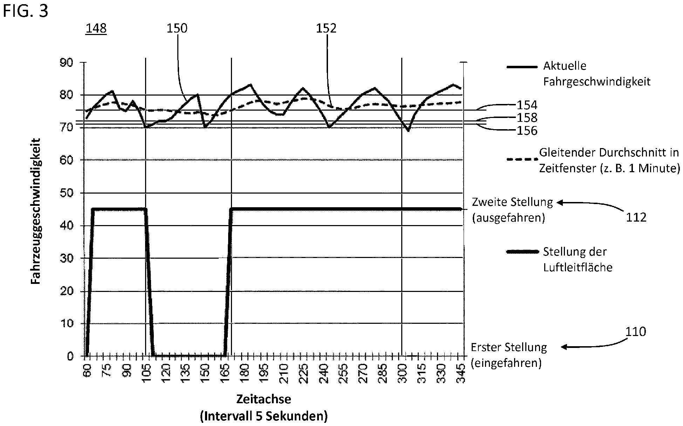

Figur 3 zeigt schematisch ein Diagramm des zeitlichen Verlaufs 148 der Fahrgeschwindigkeit 150 und der daraus resultierenden Stellungen 110 und 112 der Luftleitfläche 108. Die ausgeklappte zweite Stellung 112 der Luftleitfläche 108 ist nur unter bestimmten, von der Fahrgeschwindigkeit 150 abhängigen Bedingungen zulässig und/oder sinnvoll. Die Steuerung 122 kann dazu ausgebildet sein, mindestens eine fahrgeschwindigkeitsabhängige Bedingung zum Steuern der Stellungen 110 und 112 der Luftleitfläche 108 regelmäßig, beispielsweise kontinuierlich oder periodisch, zu prüfen.

Vorzugsweise unterscheidet sich eine fahrgeschwindigkeitsabhängige Bedingung des Ausfahrens der Luftleitfläche 108 in die zweite Stellung 112 von einer fahrgeschwindigkeitsabhängigen Bedingung des Einfahrens in die erste Stellung 110. Die Bedingung für das Einfahren kann eine größere Geschwindigkeitsveränderung oder eine langanhaltendere Geschwindigkeitsveränderung erfordern im Vergleich zur Bedingung für das Ausfahren. Beispielsweise kann das Einfahren bewirkt werden mit einer (beispielsweise für die Prüfung der Bedingung genutzten) Zeitverzögerung auf eine Fahrgeschwindigkeitsänderung, die kleiner ist als eine (beispielsweise für die Prüfung der Bedingung genutzte) Zeitverzögerung des Ausfahrens bei einer Fahrgeschwindigkeitsänderung.

Das Ausfahren der Luftleitfläche 108 erfolgt rasch oder träge. Das Einfahren der Luftleitfläche 108 erfolgt rasch oder sehr rasch. Ferner sollte ein energiezehrendes häufiges Ein- und Ausfahren der Luftleitfläche 108 vermieden werden.

Eine erste Implementierung der Steuerung 122 bewirkt die zweite Stellung 112 der Luftleitfläche 108, wenn die Fahrgeschwindigkeit 150 einen oberen Schwellwert (von beispielsweise 75 km/h) überschreitet (als Beispiel für ein rasches Ausfahren). Die erste Stellung 110 der Luftleitfläche 108 wird bei Unterschreiten einer unteren Geschwindigkeitsschwelle, die kleiner als die obere Geschwindigkeitsschwelle ist, bewirkt (als Beispiel für ein sehr rasches Einfahren). Beispielsweise ist die untere Geschwindigkeitsschwelle um 5 km/h kleiner als die obere Geschwindigkeitsschwelle. Dadurch ist ein hysteretisches Steuerverhalten erreicht, das beispielsweise ein (unnötig) häufiges Ein- und Ausfahren der Luftleitfläche 108 vermeidet.

Figur 3 betrifft eine zweite Implementierung der Steuerung 122, bei der die Stellung der Luftleitfläche 108 von einer Kombination der aktuellen Fahrgeschwindigkeit 150 und eines gleitenden Durchschnittswerts 152 der Fahrgeschwindigkeit abhängt. Als Beispiel für ein träges Ausfahren umfasst die fahrgeschwindigkeitsabhängige Bedingung für das Ausfahren eine Kombination der aktuellen Fahrgeschwindigkeit 150 und eines gleitenden Durchschnittswerts 152 der Fahrgeschwindigkeit. Als Beispiel für ein rasches oder sehr rasches Einfahren kann die fahrgeschwindigkeitsabhängige Bedingung für das Einfahren nur von der aktuellen Fahrgeschwindigkeit 150 abhängen (beispielsweise entsprechend der ersten Implementierung von der Fahrgeschwindigkeit abhängen), unabhängig von einem Durchschnittswerts 152 der Fahrgeschwindigkeit sein und/oder von einem gleitenden Durchschnittswerts 152 der Fahrgeschwindigkeit abhängen, dessen Zeitfenster kürzer ist als ein Zeitfenster des gleitenden Durchschnittswerts 152 der Fahrgeschwindigkeit beim Ausfahren.

Beispielsweise ist für die fahrgeschwindigkeitsabhängige Bedingung des Ausfahrens der gleitende Durchschnittswert 152 der Fahrgeschwindigkeit zum Zeitpunkt t der Mittelwert aller Messwerte der Fahrgeschwindigkeit 150 im Zeitfenster von t-T bis t. Die Fensterbreite T beträgt beispielsweise 1 Minute oder 12 Messwerte (beispielsweise bei einem Messintervall von 5 Sekunden).

Der Übergang des Ausfahrens von der ersten Stellung 110 in die zweite Stellung 112 ist von einer UND-Kombination der aktuellen Fahrgeschwindigkeit 150 und des gleitenden Durchschnitts 152 der Fahrgeschwindigkeit abhängig. Um die zweite Stellung 112 zu bewirken, muss die aktuelle Fahrgeschwindigkeit 150 die obere Geschwindigkeitsschwelle 154 überschreiten und der gleitende Durchschnittswert 152 der Fahrgeschwindigkeit muss die obere Geschwindigkeitsschwelle 154 überschreiten. Dies ist beispielsweise zum Zeitpunkt t=60 s erfüllt.

Bei der zweiten Implementierung der Steuerung 122 erfolgt der Übergang des Einfahrens von der zweiten Stellung 112 zur ersten Stellung 110, wenn die aktuelle Fahrgeschwindigkeit 150 die untere Geschwindigkeitsschwelle 156 einmal unterschreitet (als Beispiel für ein sehr rasches Einfahren) oder zweimal hintereinander (beispielsweise bei einem Messintervall von 5 Sekunden) unterschreitet, wie in Figur 3 als Beispiel für ein rasches Einfahren gezeigt ist. Dies ist beispielsweise zum Zeitpunkt t=105 s erfüllt. Im Zeitraum zwischen t=300 s und t=315 s kommt es nicht zum Übergang in die erste Stellung 110, da nur ein einzelner Messwert die Geschwindigkeitsschwelle 156 unterschreitet.

Alternativ oder ergänzend kann das Messintervall für die Fahrgeschwindigkeit reduziert werden, beispielsweise auf 2 Sekunden oder 1 Sekunde. Dadurch kann eine feinere, genauere und somit sicherere Regelung erreicht sein. Alternativ oder zusätzlich kann dadurch das Zeitfenster der Mittelung (insbesondere beim Übergang in den ersten Stellung 110) entsprechend verkleinert sein.

Die UND-Verknüpfung für den Übergang in die zweite Stellung 112 ist beispielsweise im Zeitraum von t=150 s bis t=165 s in Figur 3 gezeigt. Zum Zeitpunkt t=160 s überschreitet die aktuelle Fahrgeschwindigkeit 150 den oberen Geschwindigkeitsschwellwert 154. Zu einem Übergang in die zweite Stellung 112 kommt es noch nicht, da zum Zeitpunkt t=160 der gleitende Durchschnittswert 152 der Fahrgeschwindigkeit kleiner als der obere Geschwindigkeitsschwellwert 154 ist. Der gleitende Durchschnittswert 152 überschreitet den oberen Geschwindigkeitsschwellwert 154 erst zum Zeitpunkt t=165 s, woraufhin der Übergang in die zweite Stellung 112 bewirkt wird.

In einer dritten Implementierung der Steuerung 122 ist der Übergang von der zweiten Stellung 112 zur ersten Stellung 110 von einem gleitenden Durchschnittswert mit einem kürzeren Zeitfenster abhängig als das Zeitfenster für den gleitenden Durchschnittswert 152 zur Steuerung des Übergangs von der ersten Stellung 110 in die zweite Stellung 112. Beispielsweise ist die Breite T' des kürzeren Zeitfensters für den Übergang in die erste Stellung 110 ein Bruchteil (beispielsweise T'=T/6) der Breite T des längeren Zeitfensters für den Übergang in die zweite Stellung 112.

Durch das kürzere Zeitfenster, T'<T, kann der Übergang in die erste Stellung 110 schneller erfolgen.

Vorzugsweise ist für den gleitenden Durchschnittswert 152 im kürzeren Zeitfenster T' ein Schwellwert 158 für den Zeitmittelwert festgelegt, der kleiner als die obere Geschwindigkeitsschwelle 154 und größer als die untere Geschwindigkeitsschwelle 156 ist.

Beispielsweise beträgt die untere Geschwindigkeitsschwelle 70 km/h und der Schwellwert für das Zeitmittel 71 km/h. Somit klappt die Luftleitfläche 108 in die erste Stellung 110 ein, wenn die aktuelle Fahrgeschwindigkeit 150 gleich 70 km/h ist oder weniger beträgt. Das Einklappen in die erste Stellung 110 erfolgt auch bereits wenn der gleitende Durchschnittswert im kurzen Zeitfenster (mit T'=10 s oder 2 Messwerten) kleiner als 71 km/h ist. Die beiden letztgenannten Bedingungen für das Einfahren können ODER-verknüpft sein.

Vorstehend genannte Implementierungen, insbesondere die Fahrgeschwindigkeitsabhängigkeiten der drei Implementierungen der Steuerung 122, können in beliebiger Kombination implementiert werden. So können die den Implementierungen jeweils zugrundeliegenden Strategien der fahrgeschwindigkeitsabhängigen Steuerung mit der gewählten Hysteresebreite kombiniert werden. Die beispielhaft festgelegten Schwellwerte 154-158 können in Abhängigkeit von den geometrischen Kollisionsverhältnissen von Luftleitfläche 108 und Stirnseite 120 des Sattelauflegers 106 festgelegt, angepasst oder variiert werden.

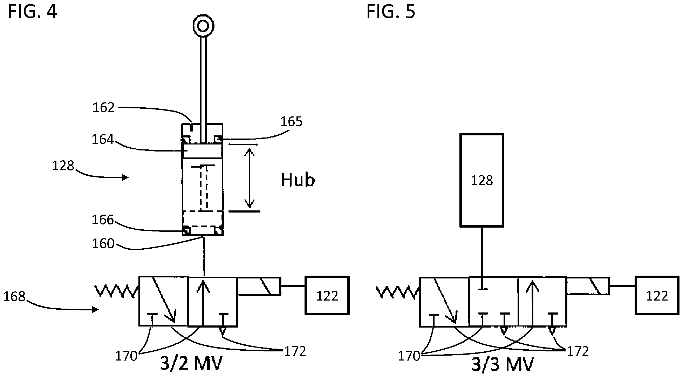

Figur 4 zeigt ein Ausführungsbeispiel einer Steuerung 122 der Vorrichtung 100. Die Vorrichtung 100 umfasst den Zylinder 128 zur Bewegung der Luftleitfläche 108 aus der ersten Stellung 110 in die zweite Stellung 112. Eine Kolbenstange eines Kolbens im Zylinder 128 ist außerhalb der Schwenkachse mit der Luftleitfläche 108 verbunden.

Im Fall einer pneumatischen Steuerung bewirkt der mit Druckluft beaufschlagten Zylinder 128 die Bewegung der Luftleitfläche 108. Der Zylinder 128 umfasst einen ersten Anschluss 160. Durch Zufuhr von Druckluft am ersten Anschluss 160 wird die zweite Stellung 112 erreicht. Luft im Gegenvolumen des Zylinders 128 steht durch einen offenen zweiten Anschluss 162 des Zylinders 128 drucklos in Verbindung (beispielsweise in Fluidverbindung) mit der Umgebung.

Die Druckluft kann einem vorhandenen Druckluftspeicher oder Druckluftsystem der Sattelzugmaschine 104 entnommen werden. Die Druckluft hebt den Kolben 164 bis zum Erreichen von oberen Anschlägen 165. Dabei wird über die Kolbenstange die Luftleitfläche 108 in die zweite Stellung 112 bewegt. Durch Ablassen der Druckluft am ersten Anschluss 160 senkt sich der Kolben 164 zu den unteren Anschlägen 166.

Die Vorrichtung umfasst ferner ein Magnetventil (MV) 168 zur Druckbeaufschlagung des Zylinders 128. Die Steuerung 122 ist mit dem Magnetventil 168 elektrisch verbunden zur Ansteuerung des Kolbenzylinders 128. Im Fall einer pneumatischen Steuerung ist das Magnetventil 168 ein Druckluftmagnetventil.

Figur 4 zeigt ein Ausführungsbeispiel der Vorrichtung mit einem 3/2-Magnetventil 168. Ein Anschluss des Magnetventils 168 ist mit dem Anschluss 160 des Zylinders 128 verbunden. Die zwei weiteren Anschlüsse 170 und 172 sind mit der Druckluftquelle bzw. einer Entlüftung (oder einer Druckluftrückführung zum Kompressor) verbunden.

Bei Druckbeaufschlagung durch die fahrzeugseitige Druckluftversorgung (z. B. mit einem Luftdruck von 8 bar) fährt der Kolben 164 bis zum Anschlag 165 aus. Die Luftleitfläche 108 ist dann vollständig ausgeklappt in der zweiten Stellung 112. Bei Verwendung eines 3/2-Magnetventil bleibt in der zweiten Stellung 112 die Druckluftzufuhr 170 über das Magnetventil 168 mit dem Anschluss 160 in Verbindung (beispielsweise in Fluidverbindung).

Figur 5 zeigt eine Variante der Vorrichtung 100 mit einem 3/3-Magnetventil 168. Der dritte Zustand (zusätzlich zu den beiden Zuständen des Ausführungsbeispiels in Figur 4) ermöglicht ein Halten des Druckzustands (gezeigt als die mittlere Ventilstellung in Figur 5). Nach dem Erreichen der zweiten Stellung 112 schaltet das 3/3-Magnetventil 168 auf Halten und die Druckluftzufuhr 170 bleibt abgetrennt.

Das zur Bereitstellung der Druckluft eingesetzte Druckluftsystem kann die Auswahl des Magnetventils 168 bestimmen. Beispiel kann durch den Haltezustand des 3/3-Magnetventils 168 ein Druckluftsystem eingesetzt werden, das keine kontinuierliche Druckluftversorgung bereitstellt, oder das aufgrund weiterer Druckluftverbraucher keinen ausreichenden Mindestdruck zum Halten der zweiten Stellung 112 bei zeitgleicher Druckluftentnahme erreicht.

Die Luftleitfläche 108 wird abgesenkt in die erste Stellung 110 durch Druckablassen bzw. Entlüften. Dazu schaltet das 3/2-Magnetventil der Figur 4 um (in den links gezeigten Zustand) bzw. das 3/3-Magnetventil 168 der Figur 5 schaltet von Druckhalten auf den (ebenfalls links gezeigten) Zustand, der den Anschluss 160 mit der Entlüftung 172 des Magnetventils verbindet. Durch das Eigengewicht des Spoilers klappt dieser herunter und schiebt den Kolben bis zum Anschlag 166 zurück.

Die Luftleitfläche kann ein Windleitblech sein. Alternativ oder ergänzend kann die Luftleitfläche und/oder der Körper der Luftleitfläche (beispielsweise für ein geringes Eigengewicht) aus Kunststoff, insbesondere einem Faser-Kunststoff-Verbund (beispielsweise kohlenstofffaserverstärktem oder glasfaserverstärktem Kunststoff), gefertigt sein.

Bei zu geringem Eigengewicht für eine Rückstellung der Luftleitfläche 108 in die erste Stellung 110 kann eine Rückstellfeder am oder um die Kolbenstange (optional innerhalb des Zylinders 128) angeordnet sein. Alternativ ist der Anschluss 162 mit einem weiteren Magnetventil verbunden, das zum Übergang von der zweiten Stellung 112 in die erste Stellung 110 den Anschluss 162 am Zylinder 128 druckbeaufschlagt.

Im Fehlerfall der Steuerung 122 oder bei (durch die Steuerung 122) unvorhersehbarem Schleudern oder Abknicken des Sattelzuges 102 kann die in der zweiten Stellung 112 ausgefahrene Luftleitfläche 108 durch Einwirkung der Stirnseite 120 zerstört werden. Daher ist an dem Lager 126 (oder der Aufnahme) der Drehachse der Luftleitfläche 108 eine Sollbruchstelle vorgesehen, so dass die Belastung für das tragende Fahrerhaus 116 bei plötzlicher Krafteinwirkung auf die Luftleitfläche 108 begrenzt wird. Dadurch kann ferner verhindert werden, dass Bruchstücke der Luftleitfläche 108 auf die Fahrbahn fallen.

Obwohl die Erfindung unter Bezugnahme auf bestimmte Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Vorrichtung zur Luftumströmung
- 102: Sattelzug mit Sattelzugmaschine und Sattelauflieger
- 104: Sattelzugmaschine
- 106: Sattelauflieger, insbesondere Kastenauflieger
- 108: Luftleitfläche, insbesondere Windleitblech
- 110: Erste Stellung der Luftleitfläche
- 112: Zweite Stellung der Luftleitfläche
- 114: Freifläche
- 116: Fahrerhaus
- 118: Fahrtwindabweiser
- 120: Stirnseite des Sattelaufliegers
- 122: Steuerung
- 124: Schwenklinie des Sattelaufliegers
- 126: Lager der Luftleitfläche
- 128: Zylinder der Luftleitfläche
- 130: Seitliche Fahrtwindleitflächen, insbesondere seitliche Windleitbleche
- 132: Rückseite des Fahrerhauses
- 134: Fahrtrichtung
- 136: Königszapfen
- 138: Rückseitige Kante des Fahrtwindabweisers
- 140: Vordere Kante der Luftleitfläche
- 142: Rückseitige Kante der Luftleitfläche
- 144: Eingeschränkter Knickwinkelbereich
- 146: Rückseitige Ecken der Luftleitfläche
- 148: Verlauf der Fahrgeschwindigkeit und der Stellung
- 150: Fahrgeschwindigkeit des Sattelzugs
- 152: Gemittelte Fahrgeschwindigkeit
- 154: Obere Geschwindigkeitsschwelle
- 156: Untere Geschwindigkeitsschwelle
- 158: Schwellwert für Zeitmittelwert
- 160: Erster Anschluss des Zylinders
- 162: Zweiter Anschluss des Zylinders
- 164: Kolben des Zylinders
- 165, 166: Kolbenanschläge des Zylinders
- 168: Magnetventil
- 170: Druckzufuhr am Magnetventil
- 172: Entlüftung des Magnetventils

## Patentansprüche

1. Vorrichtung (100) zur Luftumströmung eines Sattelzugs (102) zwischen einer Sattelzugmaschine (104) und einem Sattelauflieger (106), umfassend:
eine Luftleitfläche (108), die zwischen einer ersten Stellung (110) und einer zweiten Stellung (112) beweglich ist und dazu ausgebildet ist, in der zweiten Stellung (112) eine Freifläche (114) zwischen einem auf einem Fahrerhaus (116) der Sattelzugmaschine (104) angeordneten Fahrtwindabweiser (118) und einer Stirnseite (120) des Sattelaufliegers (106) im Vergleich zur ersten Stellung (110) zu verkleinern; und
eine Steuerung (122), die dazu ausgebildet ist, die Luftleitfläche (108) abhängig von einer Fahrgeschwindigkeit (150) des Sattelzugs in eine der Stellungen (110, 112) zu bewegen,
**dadurch gekennzeichnet, dass**
die Steuerung (122) dazu ausgebildet ist, die Luftleitfläche (108) von der zweiten Stellung (112) in die erste Stellung (110) zu bewegen abhängig von einem Verlauf (148) der Fahrgeschwindigkeit (150) in einem ersten Zeitfenster (T'), und die Luftleitfläche (108) von der ersten Stellung (110) in die zweite Stellung (112) zu bewegen abhängig von einem Verlauf der Fahrgeschwindigkeit (150) in einem zweiten Zeitfenster (T), wobei das erste Zeitfenster (T') kürzer als das zweite Zeitfenster (T) ist.

2. Vorrichtung nach Anspruch 1, wobei die Vorrichtung auf dem Fahrerhaus (116) der Sattelzugmaschine (104) und/oder am Fahrtwindabweiser (118) der Sattelzugmaschine (104) angeordnet oder anordenbar ist.

3. Vorrichtung nach Anspruch 1 oder 2, wobei in der ersten Stellung (110) eine rückseitige Kante (138) des Fahrtwindabweisers (118) der Stirnseite (120) des Sattelaufliegers (106) zugewandt ist.

4. Vorrichtung nach Anspruch 3, wobei die Kante (138) des Fahrtwindabweisers (118) konkav gekrümmt ist.

5. Vorrichtung nach einem der Ansprüche 1 bis 4, wobei die Luftleitfläche (108) in der ersten Stellung (110) vollständig im Fahrtwindabweiser (118) angeordnet oder anordenbar ist.

6. Vorrichtung nach einem der Ansprüche 1 bis 5, wobei eine Kante (142) der Luftleitfläche (108) in der zweiten Stellung (112) der Stirnseite (120) des Sattelaufliegers (106) zugewandt ist.

7. Vorrichtung nach Anspruch 6, wobei die Luftleitfläche (108) in der zweiten Stellung (112) aus dem Fahrtwindabweiser (118) entgegen der Fahrtrichtung (134) herausragt.

8. Vorrichtung nach Anspruch 6 oder 7, wobei die Kante der Luftleitfläche in der zweiten Stellung (112) zwischen der Kante (138) des Fahrtwindabweisers (118) und der Stirnseite (120) des Sattelaufliegers (106) angeordnet oder anordenbar ist.

9. Vorrichtung nach einem der Ansprüche 6 bis 8, wobei die Kante (142) der Luftleitfläche (108) über die Breite des Fahrerhauses (116) geradlinig ist, geradlinig mit abgerundeten Ecken (146) ist oder konvex zur Luftleitfläche (108) gekrümmt ist.

10. Vorrichtung nach einem der Ansprüche 1 bis 9, wobei die Luftleitfläche (108) um eine Achse schwenkbeweglich ist, die quer zur Fahrtrichtung (134) und in Fahrtrichtung (134) vor der Kante (138) des Fahrtwindabweisers (118) angeordnet oder anordenbar ist.

11. Vorrichtung nach Anspruch 10, wobei die Achse und/oder ein Lager (126) der Achse dazu ausgebildet ist, aerodynamische Kräfte bei einer Höchstgeschwindigkeit des Sattelzugs (102) an das Fahrerhaus (116) zu übertragen und bei einer mehrfach höheren Belastung und/oder einer anderen Belastungsrichtung zu brechen.

12. Vorrichtung nach einem der Ansprüche 1 bis 11, wobei die Steuerung (122) die erste Stellung (110) bei einer im Vergleich zur zweiten Stellung (112) langsameren Fahrgeschwindigkeit (156; 158) des Sattelzugs (102) bewirkt.

13. Vorrichtung nach einem der Ansprüche 1 bis 12, wobei die Steuerung (122) dazu ausgebildet ist, die zweite Stellung (112) zu bewirken, wenn die Fahrgeschwindigkeit (150; 152) größer als eine obere Geschwindigkeitsschwelle (154) ist, und/oder wobei die Steuerung (122) dazu ausgebildet ist, die erste Stellung (110) zu bewirken, wenn die Fahrgeschwindigkeit (150; 152) kleiner als eine untere Geschwindigkeitsschwelle (156; 158) ist, die kleiner als die obere Geschwindigkeitsschwelle (154) ist.

14. Vorrichtung nach Anspruch 13, wobei die untere Geschwindigkeitsschwelle (156; 158) kleiner als 75 km/h ist, und/oder die obere Geschwindigkeitsschwelle (154) größer oder gleich 75 km/h ist.

15. Sattelzugmaschine (104), umfassend eine Vorrichtung gemäß einem der Ansprüche 1 bis 14.

## Claims

1. An apparatus (100) for circulating air around a tractor-trailer (102) between a tractor unit (104) and a semi-trailer (106), comprising:
an air guide surface (108), which can be moved between a first position (110) and a second position (112) and is designed such that, in the second position (112), it is capable of reducing a free area (114) between a slipstream deflector (118) arranged on a cab (116) of the tractor unit (104) and a front side (120) of the semi-trailer (106), as compared with the first position (110); and
a controller (122), which is designed to move the air guide surface (108) into one of the positions (110, 112), depending on a speed of travel (150) of the tractor-trailer,
**characterized in that**
the controller (122) is designed to move the air guide surface (108) from the second position (112) into the first position (110), depending on a profile (148) of the speed of travel (150) in a first time window (T'), and to move the air guide surface (108) from the first position (110) into the second position (112), depending on a profile of the speed of travel (150) in a second time window (T), wherein the first time window (T') is shorter than the second time window (T).

2. The apparatus according to Claim 1, wherein the apparatus is or can be arranged on the cab (116) of the tractor unit (104) and/or on the slipstream deflector (118) of the tractor unit (104).

3. The apparatus according to Claim 1 or 2, wherein, in the first position (110), a trailing edge (138) of the slipstream deflector (118) faces the front side (120) of the semi-trailer (106).

4. The apparatus according to Claim 3, wherein the edge (138) of the slipstream deflector (118) is curved concavely.

5. The apparatus according to one of Claims 1 to 4, wherein, in the first position (110), the air guide surface (108) is or can be arranged completely in the slipstream deflector (118).

6. The apparatus according to one of Claims 1 to 5, wherein, in the second position (112), an edge (142) of the air guide surface (108) faces the front side (120) of the semi-trailer (106).

7. The apparatus according to Claim 6, wherein, in the second position (112), the air guide surface (108) projects out of the slipstream deflector (118), counter to the direction of travel (134).

8. The apparatus according to Claim 6 or 7, wherein, in the second position (112), the edge of the air guide surface is or can be arranged between the edge (138) of the slipstream deflector (118) and the front side (120) of the semi-trailer (106).

9. The apparatus according to one of Claims 6 to 8, wherein the edge (142) of the air guide surface (108) is rectilinear over the width of the cab (116), is rectilinear with rounded corners (146), or is carved convexly with respect to the air guide surface (108).

10. The apparatus according to one of Claims 1 to 9, wherein the air guide surface (108) can be swivelled about an axle which is or can be arranged transversely with respect to the direction of travel (134) and in front of the edge (138) of the slipstream deflector (118) in the direction of travel (134).

11. The apparatus according to Claim 10, wherein the axle and/or a bearing (126) of the axle is designed to transmit aerodynamic forces at a maximum speed of the tractor-trailer (102) to the cab (116) and to break under a many times higher loading and/or in a another loading direction.

12. The apparatus according to one of Claims 1 to 11, wherein the controller (122) effects the first position (110) at a speed of travel (156; 158) of the tractor-trailer (102) that is slower as compared with the second position (112).

13. The apparatus according to one of Claims 1 to 12, wherein the controller (122) is designed to effect the second position (112) when the speed of travel (150; 152) is higher than an upper speed threshold (154), and/or wherein the controller (122) is designed to effect the first position (110) when the speed of travel (150; 152) is lower than a lower speed threshold (156; 158) which is lower than the upper speed threshold (154).

14. The apparatus according to Claim 13, wherein the lower speed threshold (156; 158) is less than 75 km/h, and/or the upper speed threshold (154) is greater than or equal to 75 km/h.

15. A tractor unit (104) comprising an apparatus according to one of Claims 1 to 14.

## Revendications

1. Dispositif (100) pour la circulation d'air d'un véhicule articulé (102) entre un véhicule tracteur (104) et une semi-remorque (106), comprenant :
une surface de guidage d'air (108) qui est déplaçable entre une première position (110) et une deuxième position (112) et qui est réalisée pour réduire, dans la deuxième position (112), par comparaison avec la première position (110), une surface libre (114) entre un déflecteur de vent de relatif (118) disposé sur une cabine de conducteur (116) du véhicule tracteur (104) et un côté frontal (120) de la semi-remorque (106) ; et
une commande (122) qui est réalisée pour déplacer la surface de guidage d'air (108) en fonction d'une vitesse de conduite (150) du véhicule articulé dans l'une des positions (110, 112),
**caractérisé en ce que**
la commande (122) est réalisée pour déplacer la surface de guidage d'air (108) de la deuxième position (112) à la première position (110) en fonction d'une allure (148) de la vitesse de conduite (150) dans une première fenêtre temporelle (T'), et pour déplacer la surface de guidage d'air (108) de la première position (110) à la deuxième position (112) en fonction d'une allure de la vitesse de conduite (150) dans une deuxième fenêtre temporelle (T), la première fenêtre temporelle (T') étant plus courte que la deuxième fenêtre temporelle (T).

2. Dispositif selon la revendication 1, le dispositif étant disposé ou pouvant être disposé sur la cabine de conducteur (116) du véhicule tracteur (104) et/ou sur le déflecteur de vent relatif (118) du véhicule tracteur (104).

3. Dispositif selon la revendication 1 ou 2, dans lequel, dans la première position (110), une arête arrière (138) du déflecteur de vent relatif (118) est tournée vers le côté frontal (120) de la semi-remorque (106).

4. Dispositif selon la revendication 3, dans lequel l'arête (138) du déflecteur de vent relatif (118) présente une courbure concave.

5. Dispositif selon l'une quelconque des revendications 1 à 4, dans lequel la surface de guidage d'air (108), dans la première position (110), est disposée ou peut être disposée complètement dans le déflecteur de vent relatif (118) .

6. Dispositif selon l'une quelconque des revendications 1 à 5, dans lequel une arête (142) de la surface de guidage d'air (108), dans la deuxième position (112), est tournée vers le côté frontal (120) de la semi-remorque (106).

7. Dispositif selon la revendication 6, dans lequel la surface de guidage d'air (108), dans la deuxième position (112), fait saillie hors du déflecteur de vent relatif (118) dans le sens opposé à la direction de conduite (134).

8. Dispositif selon la revendication 6 ou 7, dans lequel l'arête de la surface de guidage d'air, dans la deuxième position (112), est disposée ou peut être disposée entre l'arête (138) du déflecteur de vent relatif (118) et le côté frontal (120) de la semi-remorque (106).

9. Dispositif selon l'une quelconque des revendications 6 à 8, dans lequel l'arête (142) de la surface de guidage d'air (108), sur la largeur de la cabine de conducteur (116), est rectiligne, rectiligne avec des coins arrondis (146) ou présente une courbure convexe vers la surface de guidage d'air (108).

10. Dispositif selon l'une quelconque des revendications 1 à 9, dans lequel la surface de guidage d'air (108) est déplaçable par pivotement autour d'un axe qui est disposé ou peut être disposé transversalement à la direction de conduite (134) dans la direction de conduite (134) avant l'arête (138) du déflecteur de vent relatif (118) .

11. Dispositif selon la revendication 10, dans lequel l'axe et/ou un palier (126) de l'axe sont réalisés de manière à transmettre les forces aérodynamiques à la cabine de conducteur (116) dans le cas d'une vitesse maximale du véhicule tracteur (102) et à se rompre dans le cas d'une sollicitation beaucoup plus élevée et/ou d'une direction de sollicitation différente.

12. Dispositif selon l'une quelconque des revendications 1 à 11, dans lequel la commande (122) enclenche la première position (110) dans le cas d'une vitesse de conduite (156 ; 158) du véhicule tracteur (102) plus lente par comparaison avec la deuxième position (112).

13. Dispositif selon l'une quelconque des revendications 1 à 12, dans lequel la commande (122) est réalisée pour enclencher la deuxième position (112) lorsque la vitesse de conduite (150 ; 152) est supérieure à un seuil de vitesse supérieur (154), et/ou dans lequel la commande (122) est réalisée pour enclencher la première position (110) lorsque la vitesse de conduite (150 ; 152) est inférieure à un seuil de vitesse inférieur (156 ; 158) qui est inférieur au seuil de vitesse supérieur (154).

14. Dispositif selon la revendication 13, dans lequel le seuil de vitesse inférieur (156 ; 158) est inférieur à 75 km/h, et/ou le seuil de vitesse supérieur (154) est supérieur ou égal à 75 km/h.

15. Véhicule tracteur (104) comprenant un dispositif selon l'une quelconque des revendications 1 à 14.
